# FASCICULE DE BREVET EUROPEEN

(11) **EP 2 917 256 B1**
(45) Date de publication et mention de la délivrance du brevet: **07.09.2016**
(21) Numéro de dépôt: 13805453.1
(22) Date de dépôt: 05.11.2013
(51) Int. Cl.: C08G 18/48, C08G 18/76, C08G 18/10, C08G 18/12, C08G 18/36, C08G 18/42, C09J 175/04, C09J 175/14, C11C 3/00, C11C 3/04, C08J 5/12, B32B 7/12, B32B 27/32, B32B 27/36, B65D 65/40

(54) **ADHESIF DE LAMINATION BICOMPOSANT D'ORIGINE RENOUVELABLE**
ZWEIKOMPONENTEN-KASCHIERKLEBER AUS ERNEUERBAREN RESSOURCEN
TWO-COMPONENT LAMINATION ADHESIVE OF RENEWABLE ORIGIN

(30) Priorité: 12.11.2012 FR 1260749
(43) Date de publication de la demande: 16.09.2015
(73) Titulaire: BOSTIK SA, 93210 La Plaine Saint Denis (FR)
(72) Inventeur: LAFERTE, Olivier, F-60350 Trosly Breuil (FR); FOUQUAY, Stéphane, F-76130 Mont Saint Aignan (FR)
(74) Mandataire: Granet, Pierre
(86) Numéro de dépôt international: PCT/FR2013/052634
(87) Numéro de publication internationale: WO 2014/072629

(56) Documents cités:
- WO-A1-2011/002975
- WO-A1-2011/030075
- US-A- 4 535 142
- US-A1- 2006 182 957

## Description

La présente invention a pour objet une composition adhésive de type polyuréthane bi composant sans solvant, qui est adaptée au complexage (ou lamination) des couches minces de matériaux notamment polymériques et/ou métalliques. Elle concerne également un film multicouche comprenant au moins 2 couches minces desdits matériaux liées entre elle par ladite composition adhésive réticulée, ainsi que l'utilisation dudit système pour la fabrication d'emballages flexibles.

Les emballages flexibles destinés au conditionnement des produits les plus divers, tels ceux fabriqués par les industries agroalimentaire, cosmétique ou de la détergence, sont généralement constitués de plusieurs couches minces (sous forme de feuilles ou de films) dont l'épaisseur est comprise entre 5 et 150 µm et qui sont constituées de différents matériaux comme le papier, un métal (par exemple l'aluminium) ou encore par des polymères thermoplastiques. Le film complexe (ou multicouche) correspondant, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité atmosphérique ou à l'oxygène,
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation.

Pour constituer l'emballage final, le film multicouche est généralement mis en forme par thermoscellage, à une température variant d'environ 120 à 250 °C, cette dernière technique étant également utilisée pour la fermeture de l'emballage autour du produit destiné au consommateur.

Les diverses couches de matériaux qui composent le film multicouche sont combinées ou assemblées par contrecollage au cours de procédés industriels de complexage (également dénommés par le terme "lamination").

Ces procédés mettent en oeuvre des adhésifs (ou colles) et des dispositifs (ou machines) conçus à cet effet. Le film multicouche ainsi obtenu est souvent lui-même qualifié par le terme "laminé".

Ces procédés comprennent tout d'abord une étape d'enduction de l'adhésif sur un premier film de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'un deuxième film de matériau, identique ou différent du premier, consistant en l'application sous pression de ce deuxième film sur le premier film recouvert de la couche de colle.

Les adhésifs de lamination de type polyuréthane bicomposant sans solvant sont largement utilisés comme colle pour la fabrication de systèmes multicouches destinés au domaine de l'emballage flexible. En effet ces adhésifs qui ne contiennent ni solvant organique ni eau présentent l'avantage de pouvoir être mis en oeuvre dans les opérations industrielles de complexage à des vitesses de ligne très élevées. Cela est dû précisément au fait qu'il n'y a pas de solvant organique ou d'eau à éliminer, ce qui évite ainsi une étape d'élimination additionnelle par passage du complexe dans un four, ou par un autre moyen.

Les adhésifs de lamination de type polyuréthane bicomposant sans solvant sont fournis au complexeur sous la forme de 2 compositions (ou composants) :
- l'un (appelé composant -NCO) contenant des entités chimiques porteuses de groupements terminaux isocyanates, et
- l'autre (appelé composant -OH) contenant des entités chimiques porteuses de groupements terminaux hydroxyles.

Le mélange de ces 2 composants est réalisé à chaud à une température comprise entre 40 et 80 °C par l'opérateur de la machine de complexage, préalablement à sa mise en route et permet, grâce à une viscosité appropriée, le fonctionnement correct de celle-ci.

A l'issue de l'enduction du mélange ainsi obtenu et de l'opération de contrecollage, les groupements isocyanates du composant -NCO réagissent avec les groupements hydroxyle du composant -OH, selon une réaction dite de réticulation, pour former un polyuréthane qui se présente sous la forme d'un réseau tridimensionnel à groupes uréthanes, assurant la cohésion du joint adhésif entre les 2 couches minces contrecollées. Le temps requis pour compléter cette réaction de réticulation et assurer ainsi le niveau de cohésion requis est en général de l'ordre de 3 à 10 jours.

Les films complexes fabriqués selon ce type de procédé conviennent bien à la fabrication d'emballages flexibles (ou souples) en raison de leur excellent niveau de cohésion.

Les entités chimiques présentes dans le composant -NCO sont le plus souvent des composés chimiques polymériques (souvent dénommés prépolymères car précurseurs du polyuréthane réticulé final constitutif du joint adhésif), et sont généralement eux-mêmes des polyuréthanes produits par la réaction d'un diisocyanate en excès avec des polyéther polyols et/ou polyester polyols, tous ces réactifs étant fabriqués à partir de matières premières d'origine pétrolière.

Les entités chimiques présentes dans le composant -OH sont des composés chimiques polymériques ou non, parfois d'origine naturelle (comme l'huile de ricin), et qui incluent généralement des polymères de type polyéther polyol et/ou polyester polyol, de masse molaire comprise entre 400 et 4000 Da qui sont également souvent fabriqués à partir de matières premières d'origine pétrolière.

Or, dans le cadre actuel du développement d'une chimie "verte", on cherche de plus en plus à s'affranchir, ou tout au moins à diminuer la part, de matières premières non renouvelables, d'origine pétrolière ou fossile, au profit de matières premières renouvelables, d'origine végétale ou animale.

La demande US 2006/0182957 décrit un adhésif de lamination de type polyuréthane bicomposant dans lequel un des composants est obtenu (ou comprend un dérivé obtenu) à partir d'une réaction de transestérification d'un triglycéride d'acide gras comme les huiles ou matières grasses d'origine animale ou végétale, avec un polyalcool contenant au moins 3 groupes hydroxyles.

La demande PCT WO2011/03007 décrit des diols de type ricinoléate et polyricinoléate préparés à partir d'huile de ricin, et leur réaction avec des isocyanates. Ce document n'envisage nullement l'obtention d'adhésif de lamination bicomposant.

La présente invention a pour but de proposer un nouvel adhésif de lamination de type polyuréthane bicomposant ayant les propriétés de cohésion requises, et dont le composant - NCO est obtenu par un procédé mettant en oeuvre davantage de matières premières renouvelables.

La présente invention a donc pour objet, en premier lieu, un adhésif de lamination bicomposant sans solvant comprenant un composant -NCO et un composant -OH, caractérisé en ce que le composant -NCO est obtenu en faisant réagir, selon une réaction de polyaddition, un excès stoechiométrique d'un polyisocyanate aromatique ou aliphatique (A) avec une composition de diols (B) comprenant, sur la base du poids total de ladite composition :
- de 60 à 100 % poids/poids d'une composition (B1) constituée d'un ou plusieurs diols di(polyricinoléates) ayant un indice d'hydroxyle I_{OH} compris entre 30 et 70 mgKOH/g et pour formule (I) : 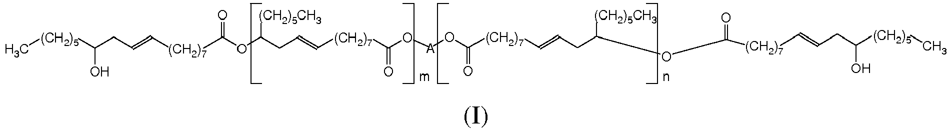 dans laquelle :
   - A représente un radical hydrocarboné divalent éventuellement interrompu par un ou plusieurs hétéroatomes choisis parmi l'oxygène ou le soufre ;
   - m et n, identiques ou différents, représentent 0 ou un nombre entier allant de 1 à 11 et sont tels que m+n varie de 0 à 11 ; et
   - de 0 à 40 % poids/poids d'une composition (B2) constituée de diols ayant un I_{OH} compris entre 72 et 360 mgKOH/g et choisis parmi :
   - les alcools gras dimérisés comprenant de 20 à 44 atomes de carbone, et
   - les diols di(polyricinoléates) ayant pour formule (II) : 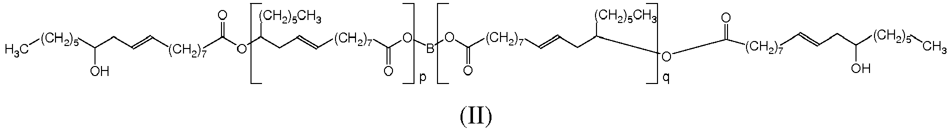 dans laquelle :
      - B représente un radical tel que défini ci-dessus pour A, identique ou différent au radical représenté par A ;
      - p et q, identiques ou différents, représentent 0 ou un nombre entier allant de 1 à 3, et sont tels que p+q varie de 0 à 3.

Les polyricinoléates constituant (B1) et le cas échéant (B2) sont obtenus à partir d'esters d'acide ricinoléique, eux-mêmes préparés à partir d'huile de ricin. Ainsi le composant -NCO compris dans l'adhésif de lamination bicomposant selon l'invention est obtenu avantageusement à partir d'une matière première renouvelable.

De plus, la viscosité dudit composant -NCO est telle qu'elle permet, après mélange avec un composant -OH approprié, d'obtenir dans les bacs d'alimentation des machines industrielles de complexage une composition adaptée en terme de viscosité, plus particulièrement une composition présentant une viscosité Brookfield à 40°C comprise dans le domaine allant de 500 à 2000 mPa.s., de préférence de 500 à 1500 mPa.s.

Ledit adhésif de lamination permet également d'obtenir une cohésion entre les 2 couches de matériaux qui est comparable à celle procurée par les produits d'origine pétrolière connus de l'art antérieur. Cette cohésion est enfin avantageusement maintenue à température élevée, plus particulièrement dans un domaine allant de 60 à 90°C, ce qui permet d'utiliser les emballages flexibles obtenus à partir de l'adhésif pour les traitements de pasteurisation des produits alimentaires.

### Composition (B1) :

La composition (B1) de diols di(polyricinoléates) de formule (I) est avantageusement préparée à partir de l'huile de ricin.

L'huile de ricin est une huile végétale qui est obtenue à partir des graines de ricin, et est constituée de triglycérides (triples esters de glycérol et d'acides gras), les dits acides gras comprenant pour environ 90% en poids un acide gras en C18, mono-insaturé et hydroxylé : l'acide ricinoléique.

Le triglycéride de l'acide ricinoléique a pour formule (III) :

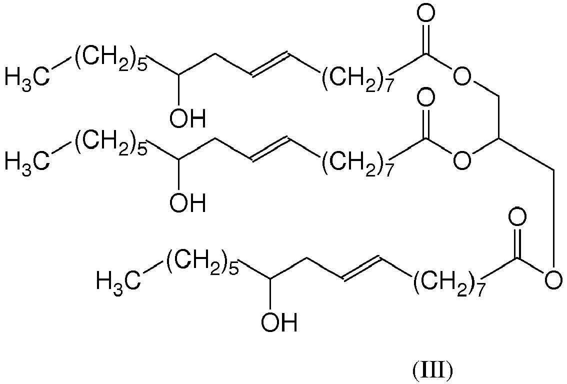

On décrit ci-après un procédé de préparation de la composition (B1) comprenant les diols di(polyricinoléates) de formule (I).

Dans une 1^{ère} étape a), on fait réagir l'huile de ricin avec un alcool de formule R¹OH dans laquelle R¹ représente un radical C₁-C₄ alkyle, de préférence méthyle, selon une réaction de transestérification, de manière à obtenir une composition comprenant le monoester de l'acide ricinoléique de formule (IV) : 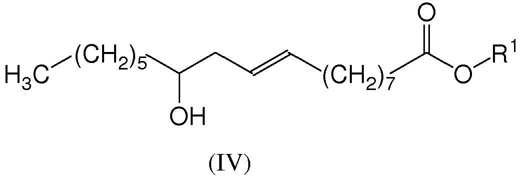 dans laquelle R¹ a la même signification que précédemment.

La réaction s'effectue avantageusement en présence d'un catalyseur de transestérification et par chauffage à une température comprise entre 50 et 90 °C.

Dans une 2^{ème} étape b) on procède, à partir du composé de formule (IV) compris dans la composition obtenue, à une réaction d'oligomérisation, dans laquelle la fonction ester d'une molécule dudit composé est transestérifiée par la fonction -OH portée par le carbone d'une autre molécule de ce même composé, pour former une composition comprenant au moins environ 80 % en poids de polyricinoléates de formule (V) également dénommés estolides de ricin : 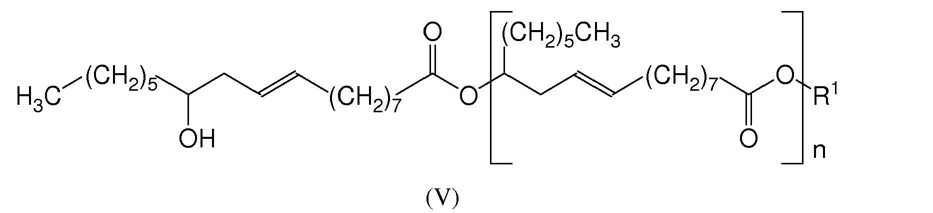 dans laquelle n est tel que défini précédemment.

De préférence, cette étape est effectuée à une température comprise entre 100 et 220 °C, sous pression réduite d'environ 10 mbar et en présence, comme catalyseur de transestérification, de méthanolate de sodium MeONa.

Dans une 3^{ème} étape c), on obtient la composition (B1) de diols di(polyricinoléates) de formule (I), en faisant réagir, selon une nouvelle réaction de transestérification, les composés de formule (V) compris dans la composition obtenue précédemment avec un ou plusieurs composés de formule (VI) :

HO-A-OH (VI)

dans laquelle A est tel que défini précédemment.

De préférence cette étape c) est effectuée en présence d'un catalyseur de transestérification et à une température comprise entre 90 et 200 °C pour une pression réduite d'environ 10 mbar.

Les catalyseurs de transestérification mis en oeuvre dans le procédé qui vient d'être décrit sont ceux normalement utilisés, et sont de préférence choisis dans le groupe constitué de l'oxyde de magnésium, de l'acétate de zinc, du tétraalkoxyde de titane (tel que le tétrabutoxyde de titane) et du méthanolate de sodium.

Pour plus de détails concernant ce procédé, il est fait référence à la demande WO 2011/030075.

Les étapes b) et c) sont réalisées soit séquentiellement, soit simultanément en faisant réagir dans ce cas directement le composé de formule (IV) avec le ou les diol(s) de formule (VI).

L'indice d'hydroxyle I_{OH} est le nombre de moles de fonction hydroxyle présente par gramme de composition de diols polyricinoléates (B1). Ce nombre est exprimé sous la forme du nombre équivalent de milligrammes de KOH mesuré expérimentalement pour neutraliser l'acide acétique qui se combine à 1 g de composition (B1) par une réaction d'acétylation.

Les di(polyricinoléates) de formule (I) ainsi obtenus en mélange dans la composition (B1) sont porteurs de 2 fonctions -OH et sont donc bien susceptibles de réagir avec des composés terminés par des groupes -NCO.

Certaines compositions de diols di(polyricinoléates) couvertes par la définition de (B1) sont disponibles dans le commerce. On peut citer ainsi :
- le Polycin XP D-2000 disponible auprès de la société Vertellus Performance Materials Inc. et dont le I_{OH} est égal à 55 ;
- le Polycin^{®} GR-35 également disponible auprès de la société Vertellus Performance Materials Inc. et dont le I_{OH} est égal à 38.

Le radical divalent hydrocarboné A peut être saturé ou insaturé, linéaire ou ramifié, acyclique ou cyclique et de nature aliphatique ou aromatique et correspond avantageusement à un diol de formule (VI) dont chacune des 2 fonctions -OH est remplacée par une liaison simple, et dont l'indice d'hydroxyle I_{OH} est compris dans le domaine allant de 110 à 1808 mg KOH/g.

Selon une variante préférée de l'invention, le radical divalent A correspond à un diol de formule HO-A-OH (VI) choisi parmi :
(a) l'éthylène glycol (I_{OH} = 1808 mg KOH/g) ;
(b) le butanediol-1,4 (I_{OH} = 1245 mg KOH/g) ;
(c) le diéthylène glycol (IOH égale 1060 mg KOH/g) ;
(d) le cyclohexanediméthanol-1,4 (I_{OH} = 778 mg KOH/g) ;
(e) un PolyPropylèneGlycol de masse molaire allant de 400 g/mole (I_{OH} égale 281 mg KOH/g) à 1000 g/mole (I_{OH} égale 112 mg KOH/g) ; ou
(f) un alcool gras dimérisé aliphatique comprenant de 20 à 44 atomes de carbone dénommé ci-après composé (D) (I_{OH} compris entre 176 et 357 mg KOH/g) ;

De tels composés peuvent avantageusement être préparés à partir de matières premières naturelles et renouvelables.

Selon une variante préférée de l'invention, le radical divalent A des composés de formule (I) compris dans la composition B1 correspond à un alcool gras dimérisé aliphatique (f) comprenant de 20 à 44 atomes de carbone, et de façon plus particulièrement préférée comprenant de 35 à 37 atomes de carbone.

Selon une autre variante également préférée de l'invention, le radical divalent A correspond à un PolyPropylèneGlycol de masse molaire allant de 400 à 1000 g/mole, et tout particulièrement à un PolyPropylèneGlycol de masse molaire de 400 g/mole.

Les alcools gras dimérisés (f) cités précédemment sont obtenus, sous la forme d'une composition, par hydrogénation d'un dimère d'acide gras insaturé (sous forme acide ou ester), ledit acide gras comprenant de 10 à 22 atomes de carbone et de 1 à 3 doubles liaisons. On peut citer à titre d'exemple d'un tel acide gras les acides oléique, linoléique, palmitoléique, linolénique, éléostearique, ricinoléique, vernolique, licanique, myristoléique, margaroléique, gadoléique, eicosadiènoique et/ou érucique.

Ces acides gras insaturés sont présents sous la forme de triglycérides dans de nombreuses huiles végétales, comme les huiles de pin, de colza, de maïs, de tournesol, de soja, de lin, de noix de coco, de jojoba ou de pépins de raisin. Ils en sont extraits par exemple par transestérification des triglycérides correspondants au méthanol.

Les esters méthyliques d'acides gras insaturés ainsi obtenus en mélange sont alors oligomérisés par chauffage selon une réaction de condensation sur les doubles liaisons, qui conduit à la formation de mélanges de composés dimères et trimères d'esters méthyliques d'acides gras. Par dimères ou trimères d'ester méthylique d'acides gras, on entend désigner des oligomères de 2 ou 3 monomères, identiques ou différents, porteurs de, respectivement, 2 ou 3 fonctions esters.

Les dimères d'esters méthyliques sont alors obtenus par distillation de ces derniers mélanges, puis soumis à une hydrogénation catalytique, conduisant à la réduction des 2 fonctions ester en fonction -OH, pour former l'alcool gras dimérisé (f), généralement sous la forme d'une composition.

De tels dimères (f) sont également disponibles commercialement. On peut ainsi en mentionner comme exemple une composition d'alcools gras dimérisés comprenant de 35 à 37 atomes de carbone présentant un I_{OH} compris entre 202 et 212 mg KOH/g (M compris entre 529 et 556 g) qui est commercialisée sous les dénominations Pripol^{®} 2033 par la société Croda et Sovermol® 908 par la Société Cognis.

Selon une autre variante préférée de l'invention, les diols di(polyricinoléate) constituant la composition B1 ont un indice d'hydroxyle I_{OH} compris entre 35 et 65 mgKOH/g.

### Composition (B2) :

Les alcools gras dimérisés comprenant de 20 à 44 atomes de carbone qui constituent l'une des variantes de la composition (B2) sont tels que définis précédemment pour le composé (f) et constituent une variante préférée.

De manière encore plus préférée, la composition (B2) est constituée d'une composition d'alcools gras dimérisés comprenant de 35 à 37 atomes de carbone, correspondant à un I_{OH} compris entre 202 et 212 mg KOH/g. Ladite composition est disponible commercialement sous la dénomination de Pripol® 2033.

De façon avantageuse, la composition de diols (B) comprend de 70 à 100 % poids/poids de (B1) et de 0 à 30 % poids/poids de (B2). De façon encore plus avantageuse, la composition de diols (B) comprend de 75 à 100 % poids/poids de (B1) et de 0 à 25 % poids/poids de (B2).

La composition B, lorsqu'elle comprend les compositions B1 et B2, est obtenue par simple mélange de celles-ci.

Le composant -NCO de l'adhésif de lamination selon l'invention est obtenu en faisant réagir sur la composition de diols B un excès stoechiométrique d'un polyisocyanate aromatique ou aliphatique (A).

Ledit polyisocyanate (A) est généralement choisi parmi les polyisocyanates aromatiques tels que le 2,4- ou le 4,4'-diphénylméthane-diisocyanate (ou MDI) et le toluènediisocyanate (TDI), les polyisocyanates aliphatiques tels que l'hexaméthylènediisocyanate (HMDI), les polyisocyanates alicycliques tels que l'isophoronediisocyanate (IPDI), les polyisocyanates modifiés, par exemple obtenus par réaction avec le triméthylol-propane, de l'eau ou par cyclisation, ainsi que les mélanges d'un ou plusieurs de ces composés.

De préférence, on utilise les polyisocyanates aromatiques et plus particulièrement le MDI.

La mise en oeuvre d'un excès stoechiométrique du polyisocyanate (A) signifie que l'on utilise un excès du nombre équivalent de groupes -NCO (présents dans la quantité de polyisocyanate) par rapport au nombre équivalent de groupes -OH (présents dans la quantité totale de composition (B)).

De préférence, ces quantités correspondent à un rapport équivalent -NCO/-OH compris entre 2 et 10, encore plus préférentiellement entre 2,5 et 6,5. Les quantités pondérales de (A) et (B) à charger dans le réacteur sont déterminées sur la base de ce rapport ainsi que, s'agissant de la composition (B), sur son indice d'hydroxyle I_{OH} mesuré expérimentalement ou calculé à partir des I_{OH} de B1 et B2 et de leur teneur pondérale respective dans B.

Outre le composant -NCO décrit précédemment, l'adhésif de lamination bicomposant selon l'invention comprend également un composant -OH.

De préférence, le composant -OH est une composition comprenant au moins environ 80 % en poids de triglycéride d'acide ricinoléique, obtenue avantageusement à partir de l'huile de ricin.

Les composants -NCO et -OH sont avantageusement présents dans l'adhésif de lamination selon l'invention dans une quantité correspondant à un ratio molaire -NCO/-OH égal à environ 2.

L'invention concerne également un film multicouche (ou complexe) comprenant 2 couches minces de matériau liées entre elles par une couche continue, caractérisé en ce que ladite couche est constituée par l'adhésif de lamination bicomposant selon l'invention à l'état réticulé, à raison d'une quantité inférieure à 10 g/m².

Selon une variante de l'invention, ladite quantité est inférieure ou égale à 7 g/m², et de préférence va de 0,5 à 2 g/m².

Les matériaux dont sont constituées les couches minces entourant la couche adhésive sont généralement choisis parmi le papier, un métal, comme par exemple l'aluminium ou les polymères thermoplastiques tels que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère ou copolymère d'acide lactique (PLA), ou
- un polyhydroxyalkanoate (PHA).

L'épaisseur des 2 couches minces adjacentes à la couche adhésive et des autres couches mises en oeuvre dans le film multicouche selon l'invention est susceptible de varier dans un large domaine allant de 5 à 150 µm. L'épaisseur totale dudit film est susceptible de varier également dans un large domaine allant de 20 à 400 µm.

L'invention concerne encore un procédé de préparation en continu du film multicouche selon l'invention, comprenant les étapes séquentielles de :
(i) combinaison des composants -NCO et -OH sous la forme d'un mélange adhésif rendu coulable par chauffage à une température appropriée,
(ii) enduction par ledit mélange adhésif d'une première couche mince de matériau sous la forme d'une couche substantiellement continue,
(iii) contrecollage d'une seconde couche mince, sur la première couche mince enduite conformément à l'étape (ii), puis
(iv) réticulation du mélange adhésif.

L'invention concerne enfin l'utilisation du film multicouche selon l'invention pour la fabrication d'emballages flexibles. Les films complexes selon l'invention sont en effet utilisables pour la fabrication d'emballages flexibles les plus divers, qui sont mis en forme puis fermés (après l'étape de conditionnement du produit destiné au consommateur) par des techniques de thermoscellage (ou thermosoudage).

L'invention est à présent décrite dans les exemples de réalisation suivants qui sont donnés à titre purement illustratif, et ne sauraient être interprétés pour en limiter la portée.

**Exemple A (référence):** Préparation d'une composition (B1) comprenant des diols di(polyricinoléate) d'alcools gras dimérisés de 35 à 37 atomes de carbone, de formule (I) :
On décrit ci-après la préparation d'une composition (B1) qui comprend des diols de formule (I) dans laquelle le radical divalent A correspond à un alcool gras dimérisé (diol) comprenant de 35 à 37 atomes de carbone dans lequel chacune des 2 fonctions -OH est remplacée par une valence libre.

### 1^{ère} étape : Préparation du ricinoléate de méthyle (formule (IV) dans laquelle R¹ est un radical méthyle) :

On introduit dans un réacteur double enveloppe de 30 litres 16 980 g d'huile de ricin (teneur en triglycéride d'acide ricinoléique d'environ 89 % en poids, masse molaire moyenne de 928 g/mol, teneur en eau égale à 0,35% en poids) avec 4 393 g de méthanol et 454,12 g de MeONa. L'ensemble est chauffé à 75°C et maintenu à cette température pendant 2 heures, puis le milieu réactionnel est refroidi à 40°C.

Le mélange réactionnel résultant est ensuite laissé décanter, puis on effectue plusieurs lavages à l'eau pour éliminer le glycérol.

On obtient 15 990 g d'une composition comprenant environ 89 % en poids de ricinoléate de méthyle.

### 2^{ème} étape : Réaction avec une composition d'alcools gras dimérisés comprenant de 35 à 37 atomes de carbone :

On utilise comme composition d'alcools gras dimérisés qui comprennent de 35 à 37 atomes de carbone un échantillon du produit Pripol® 2033 commercialisé par la société Croda, qui présente un I_{OH} de 207 mg KOH/g déterminé par titrimétrie et qui est à 100 % d'origine renouvelable.

1875 g (6 moles) de la composition obtenue à la 1^{ère} étape, 542 g (1 mole) de Pripol^{®} 2033 et 24 g de Ti(OBu)₄ (1 % en poids du mélange des réactifs) sont introduits dans un réacteur de 5 litres et chauffés jusqu'à 90°C pendant 30 minutes avec un léger bullage d'azote. Le milieu réactionnel est ensuite porté jusqu'à 200° C sous couverture d'azote, sous agitation mécanique et sous vide partiel de 10 mbar pour éliminer le méthanol généré. La réaction de condensation (transestérification) est poursuivie pendant environ 6 heures jusqu'à l'obtention d'une composition présentant un indice d'hydroxyle de 50,5 mg KOH/g.

Une fois la réaction terminée, le milieu réactionnel est refroidi à environ 85°C et le milieu filtré pour éliminer le catalyseur Ti(OBu)₄ résiduel.

On obtient 2180 g d'une composition qui comprend au moins environ 80 % de composés de formule (I) sous la forme d'un liquide jaune, visqueux à température ambiante, et qui est à 100 % d'origine renouvelable.

**Exemple B (référence) :** Préparation d'une composition (B1) comprenant des diols di(polyricinoléate) d'un polypropylène glycol de masse molaire 400 g/mole, de formule (I) :
On décrit ci-après la préparation d'une composition (B1) comprenant des diols de formule (I) dans laquelle A est un radical poly(oxypropylène) qui correspond à un polypropylène glycol de masse molaire 400 g/mole sans les fonctions -OH terminales, d'origine à 100 % fossile.

### 1^{ère} étape : Préparation du ricinoléate de méthyle (formule (IV) dans laquelle R¹ est un radical méthyle) :

On répète la 1^{ère} étape de l'exemple A.

### 2^{ème} étape : Réaction avec un polypropylène glycol de masse molaire 400 g/mole:

1562 g (5 moles) de ricinoléate de méthyle, 400 g (1 mole) d'un polypropylène glycol de masse molaire 400 g/mole, et 21 g de Ti(OBu)₄ (1 % en poids du mélange des réactifs) sont introduits dans un réacteur double enveloppe de 5 litres et chauffé jusqu'à 90°C pendant 30 minutes avec un léger bullage d'azote. Le milieu réactionnel est ensuite porté jusqu'à 200° C sous couverture d'azote, sous agitation mécanique et sous vide partiel de 10 mbar pour éliminer le méthanol généré. La réaction de condensation est poursuivie pendant environ 6 heures jusqu'à l'obtention d'un indice d'hydroxyle de 59,7 mg KOH/g.

Une fois la réaction terminée, le milieu réactionnel est refroidi à environ 85°C et le milieu filtré pour éliminer le catalyseur Ti(OBu)₄ résiduel.

On obtient 1766 g d'une composition qui comprend au moins environ 80 % de composés de formule (I) sous la forme d'un liquide jaune, visqueux à température ambiante, et qui est donc à 80 % d'origine renouvelable.

### Exemple 1 : Adhésif de lamination bicomposant ayant pour composant -NCO le produit de réaction du diphényl méthane diisocyanate (ci-après MDI) avec une composition (B) constituée de la composition (B1) de l'exemple A :

### 1.1. Préparation du composant -NCO :

On utilise un échantillon d'un mélange d'isomères 4,4' et 2,4' du MDI (à raison de respectivement environ 50% / 50 % en poids), qui titre 33,5 % poids/poids en groupe -NCO, a pour masse molaire 250 g/mole et qui est à 100 % un produit d'origine pétrolière, donc fossile.

Dans un réacteur fermé de 250 ml, équipé d'une agitation, de moyens de chauffe, d'un thermomètre et relié à une pompe à vide, on introduit sous flux d'azote et à température ambiante, 100 g de la composition de l'exemple A (correspondant à un nombre équivalent de fonction -OH égal à 0,90 mmol/g). L'ensemble est chauffé à 80 °C et maintenu à pression réduite de 20 mbar durant 1 heure pour déshydrater les diols.

Puis, on introduit sous flux d'azote 71,8 g de MDI (correspondant à un nombre de fonctions -NCO égal à 7,98 mmol/g).

Les quantités introduites en poids correspondent ainsi à un ratio molaire équivalent NCO/OH égal à 6,4 (cf Tableau 1). L'ensemble est maintenu à pression réduite de 20 mbar et à 70 °C pendant 3 heures jusqu'à la consommation complète des fonctions hydroxyle des diols de la composition de l'exemple A, correspondant à une teneur en -NCO (suivie par titrage potentiométrique) de 11,8 % poids/poids (cf Tableau 1).

On obtient 171,8 g de polyuréthane, dont la teneur en groupe -NCO de 11,8 % poids/poids correspond à une teneur de 2,81 mmol/g.

### 1.2. Préparation de l'adhésif de lamination bicomposant :

On utilise comme composant -OH une huile de ricin ayant un I_{OH} moyen de 162 mgKOH/g.

Le composant -NCO préparé au § 1.1. est mélangé au composant -OH à raison d'un rapport équivalent molaire -NCO/-OH égal à 2,1, ce qui en poids correspond à un mélange de 100 g de composé -NCO pour 46,3 g de composant -OH (compte tenu de la teneur pondérale en groupe -NCO du composant -NCO préparé au § 1.1).

Le mélange est effectué à une température de 40°C dans le bac d'alimentation de la machine de complexage décrite au point 1.4. ci-après. La viscosité Brookfield à 40°C de la composition obtenue est mesurée : la valeur obtenue est indiquée dans le Tableau 1.

### 1.3. Calcul du taux de matières premières renouvelables :

Le taux de matières premières renouvelables est défini comme étant le poids total d'ingrédients d'origine renouvelable rentrant dans la préparation de l'adhésif de lamination bicomposant, ramené à 100 g dudit adhésif.

Pour calculer ce taux, on raisonne sur la base de 100 g de composition B constituée en l'espèce de la composition B1 de l'example A (qui est à 100% d'origine renouvelable). A ces 100 g, on ajoute 71,8 g de MDI qui est un ingrédient à 100% d'origine fossile et dont le poids est calculé en utilisant l'I_{OH} de ladite composition A et le ratio molaire équivalent NCO/OH indiqué dans le Tableau 1. On forme ainsi 171,8 g de composant -NCO.

A ces 171,8 g de composant -NCO, il faut rajouter une quantité -en tant que composant -OH- d'huile de ricin (ingrédient d'origine 100% renouvelable) égale à 79,5 g de manière à respecter le ratio rapport équivalent molaire NCO/OH de 2,1.

On obtient ainsi : 171,8 + 79,5 g de bicomposant NCO et OH, qui contient un poids d'ingrédient d'origine renouvelable égal à : 100 g de composition B et 79,5 g de composant-OH. D'où le ratio de 71 % indiqué dans le Tableau 1.

### 1.4. Préparation de 2 films complexes bicouches A et B :

Le mélange bicomposant obtenu au § 1.2. est utilisé pour la fabrication :
- d'un bicouche A dont la 1^{ère} couche est constituée d'un film de polypropylène orienté d'épaisseur 20 µm et la 2^{ème} couche d'un film de polypropylène orienté métallisé d'épaisseur 18 µm ; et
- d'un bicouche B dont la 1^{ère} couche est constituée d'un film de PET (PolyEthèlèneTéréphtalate) d'épaisseur 12 µm et la 2^{ème} couche d'un film de PET d'épaisseur 50 µm.

On utilise pour cela une machine de complexage de type Nordmeccanica pourvu d'un dispositif d'enduction de type rouleau avec bac ouvert fonctionnant à une température de 40°C et à une vitesse de défilement de 50 m/minute ; la couche adhésive liant les 2 films des bicouches A et B présente une épaisseur d'environ 2 µm et la couche adhésive du bicouche A est en contact avec la face métallisée du film polypropylène correspondant.

### 1.5. Mesure de la cohésion du film bicouche A à température ambiante :

Afin de compléter la réaction de réticulation entre les composants -NCO et -OH de l'adhésif bicomposant, le film bicouche A obtenu au § 1.4. est placé durant 10 jours dans une enceinte climatique maintenue à une température de 23 °C et une humidité relative de 50 %.

Ledit bicouche est ensuite remis à température ambiante, puis soumis au test de pelage à 180° conformément au § 1.7.

Le résultat obtenu est indiqué dans le Tableau 1.

### 1.6. Mesure de la cohésion du film bicouche B avant et après essai de pasteurisation :

On répète sur le film bicouche B le protocole du § 1.5. : le résultat du test de pelage à 180°, effectué sur un échantillon dudit film, est indiqué dans le Tableau 1 sous la dénomination "avant pasteurisation".

On place ensuite le même bicouche B dans une étuve à 90°c durant 1 heure (essai représentatif d'un traitement de pasteurisation), et l'on procède à nouveau sur un nouvel échantillon dudit film à un test de pelage à 180°, dont le résultat est indiqué dans le Tableau 1 sous la dénomination "après pasteurisation".

### 1.7. Description du test de pelage à 180° :

La cohésion du film bicouche est évaluée par le test de pelage à 180° tel que décrit dans la norme française NF T 54-122. Le principe de ce test consiste en la détermination de la force nécessaire à la séparation (ou pelage) de 2 couches individuelles de films liées par l'adhésif bicomposant.

Une éprouvette de forme rectangulaire de 15 mm de large et d'environ 10 cm de long est découpée dans le film bicouche. On décolle manuellement à partir de l'extrémité de cette éprouvette, et sur environ 2 cm, les 2 couches individuelles de film comprises dans cette bande et les 2 extrémités libres ainsi obtenues sont fixées sur deux dispositifs d' attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre- mesure la force supportée par l'éprouvette ainsi maintenue, et mesurée en Newton.

### Exemples 2-5 (selon l'invention) et 6-7 (comparatifs) :

### Préparation du composant -NCO :

On répète pour chaque composition B du Tableau 1 le protocole du § 1.1. en ajustant les quantités de réactifs de manière à obtenir le ratio molaire équivalent NCO/OH indiqué dans le Tableau 1. Dans le cas d'une composition B constituée de 2 compositions (B1 et B2), l'indice d'hydroxyle I_{OH} de B est obtenu en calculant la moyenne de l'I_{OH} de B1 et B2 pondérée par les teneurs pondérales de B1 et B2 dans B.

La teneur pondérale en groupe -NCO du composant -NCO obtenu est indiquée dans le Tableau 1.

### Préparation de l'adhésif de lamination bicomposant, des films bicouches A et B et leur caractérisation :

On répète le protocole du § 1.2. pour la préparation de l'adhésif de lamination bicomposant, en maintenant un rapport en équivalent molaire composant -NCO / composant -OH fixe et égal à 2,1, et en calculant les quantités pondérales correspondantes en tenant compte de la teneur pondérale en groupe -NCO du composant -NCO indiquée dans le Tableau 1.

S'agissant du calcul du taux de matières premières renouvelables, on adapte le bilan massique effectué au § 1.3 aux teneurs en B1 et B2 de la composition B, en tenant compte du fait que la composition de l'exemple B est à 80% d'origine renouvelable, et que le Pripol® 2033 est à 100% d'origine renouvelable.

On répète également les protocoles des § 1.4 à 1.7.

Les résultats obtenus sont rassemblés dans le Tableau 1.

### Exemple 8 (Référence) :

### Composant -NCO :

On utilise le composant -NCO d'un adhésif de lamination bicomposant fabriqué à partir de matières premières d'origine pétrolière et commercialisé par la société Bostik sous la dénomination MP830. La teneur pondérale en groupe -NCO dudit composant est de 14%.

### Préparation de l'adhésif de lamination bicomposant, des films bicouches A et B et leur caractérisation :

On répète les protocoles des § 1.2. à 1.7.

On mesure pour le mélange des composants -NCO et -OH une viscosité Brookfield à 40°C de 640 mPa.s.

Le taux de matières premières renouvelables est de : 35,5 %.

La valeur obtenue au test de pelage à 180° sur le bicouche A est de 0,93 N.

La valeur obtenue au test de pelage à 180° sur le bicouche B avant pasteurisation est de 4,7 N.

La valeur obtenue au test de pelage à 180° sur le bicouche B après pasteurisation est de 2,8 N.

Les adhésifs de lamination des exemples 1 à 5 selon l'invention présentent un taux de matières premières renouvelables avantageusement très supérieur à celui de l'exemple 8 de référence, tout en permettant la préparation de films bicouches qui présentent une cohésion comparable.

Le mélange des composants -NCO et -OH correspondant aux exemples comparatifs 6 et 7 ne convient pas, en raison de sa viscosité à 40°C, à une utilisation comme adhésif de lamination.

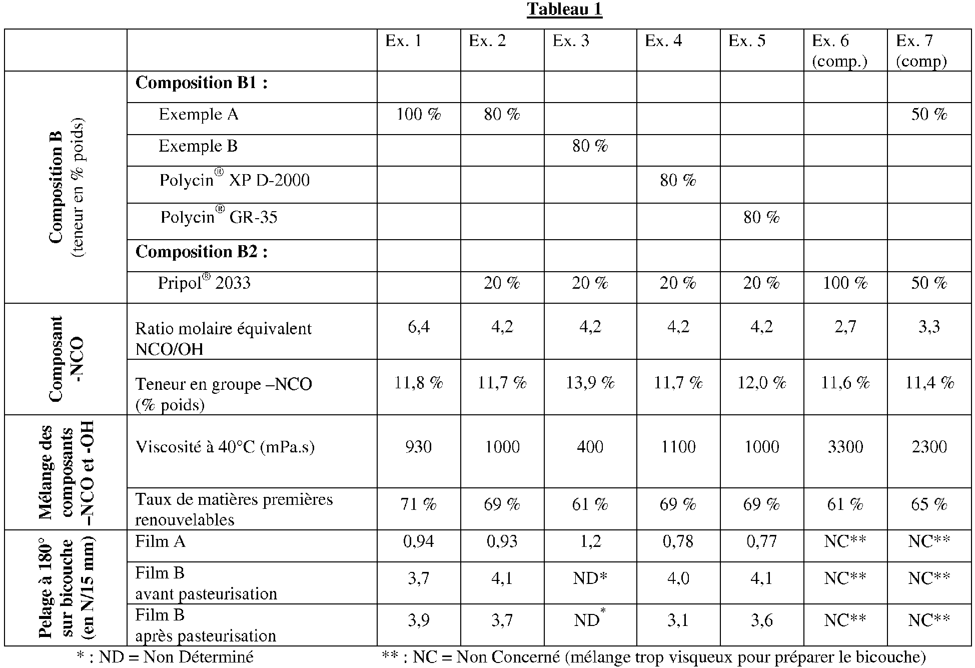

## Revendications

1. Adhésif de lamination bicomposant sans solvant comprenant un composant -NCO et un composant -OH, **caractérisé en ce que** le composant -NCO est obtenu en faisant réagir, selon une réaction de polyaddition, un excès stoechiométrique d'un polyisocyanate aromatique ou aliphatique (A) avec une composition de diols (B) comprenant, sur la base du poids total de ladite composition :
- de 60 à 100 % poids/poids d'une composition (B1) constituée d'un ou plusieurs diols di(polyricinoléates) ayant un indice d'hydroxyle I_{OH} compris entre 30 et 70 mgKOH/g et pour formule (I) : 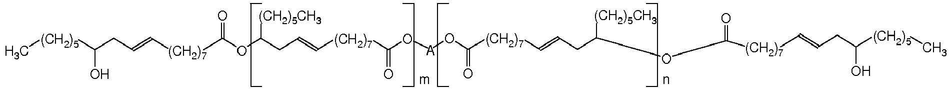 (I) dans laquelle :
- A représente un radical hydrocarboné divalent éventuellement interrompu par un ou plusieurs hétéroatomes choisis parmi l'oxygène ou le soufre ;
- m et n, identiques ou différents, représentent 0 ou un nombre entier allant de 1 à 11 et sont tels que m+n varie de 0 à 11 ; et
- de 0 à 40 % poids/poids d'une composition (B2) constituée de diols ayant un I_{OH} compris entre 72 et 360 mgKOH/g et choisis parmi :
- les alcools gras dimérisés comprenant de 20 à 44 atomes de carbone, et
- les diols di(polyricinoléates) ayant pour formule (II) : 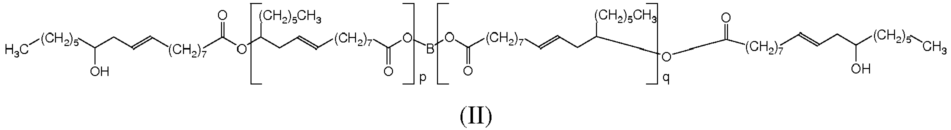 dans laquelle :
- B représente un radical tel que défini ci-dessus pour A, identique ou différent au radical représenté par A ;
- p et q, identiques ou différents, représentent 0 ou un nombre entier allant de 1 à 3, et sont tels que p+q varie de 0 à 3.

2. Adhésif de lamination bicomposant selon la revendication 1, **caractérisé en ce que** la viscosité Brookfield à 40°C du composant -NCO est comprise dans le domaine allant de 500 à 2000 mPa.s.

3. Adhésif de lamination bicomposant selon l'une des revendications 1 ou 2, **caractérisé en ce que** la viscosité Brookfield à 40°C du composant -NCO est comprise dans le domaine allant de 500 à 1500 mPa.s.

4. Adhésif de lamination bicomposant selon l'une des revendications 1 à 3, **caractérisé en ce que** le radical hydrocarboné divalent A correspond à un diol de formule :
HO-A-OH (VI)
dont chacune des 2 fonctions -OH est remplacée par une liaison simple, et dont l'indice d'hydroxyle I_{OH} est compris dans le domaine allant de 110 à 1808 mg KOH/g.

5. Adhésif de lamination bicomposant selon l'une des revendications 1 à 4, **caractérisé en ce que** le radical divalent A correspond à un diol de formule HO-A-OH (VI) choisi parmi :
(a) l'éthylène glycol ;
(b) le butanediol-1,4 ;
(c) le diéthylène glycol ;
(d) le cyclohexanediméthanol-1,4 ;
(e) un PolyPropylèneGlycol de masse molaire allant de 400 g/mole à 1000 g/mole;ou
(f) un alcool gras dimérisé aliphatique comprenant de 20 à 44 atomes de carbone.

6. Adhésif de lamination bicomposant selon l'une des revendications 1 à 5, **caractérisé en ce que** le radical divalent A correspond à un diol de formule HO-A-OH (VI) choisi parmi un alcool gras dimérisé aliphatique comprenant de 35 à 37 atomes de carbone ou un PolyPropylèneGlycol de masse molaire de 400 g/mole.

7. Adhésif de lamination bicomposant selon l'une des revendications 1 à 6, **caractérisé en ce que** les diols di(polyricinoléate) constituant la composition B1 ont un indice d'hydroxyle I_{OH} compris entre 35 et 65 mgKOH/g.

8. Adhésif de lamination bicomposant selon l'une des revendications 1 à 7, **caractérisé en ce que** la composition de diols (B) comprend de 70 à 100 % poids/poids de (B1) et de 0 à 30 % poids/poids de (B2).

9. Adhésif de lamination bicomposant selon l'une des revendications 1 à 8, **caractérisé en ce que** le polyisocyanate (A) est le 2,4- ou le 4,4'-diphénylméthane-diisocyanate (MDI).

10. Adhésif de lamination bicomposant selon l'une des revendications 1 à 9, **caractérisé en ce que** les quantités de (A) et (B) correspondent à un rapport équivalent -NCO/- OH compris entre 2 et 10.

11. Adhésif de lamination bicomposant selon l'une des revendications 1 à 10, **caractérisé en ce que** le composant -OH est une composition comprenant au moins environ 80 % en poids de triglycéride d'acide ricinoléique.

12. Adhésif de lamination bicomposant selon l'une des revendications 1 à 11, **caractérisé en ce que** les composants -NCO et -OH sont présents dans une quantité correspondant à un ratio molaire -NCO/-OH égal à environ 2.

13. Film multicouche comprenant 2 couches minces de matériau liées entre elles par une couche continue, **caractérisé en ce que** ladite couche est constituée par l'adhésif de lamination bicomposant tel que défini dans l'une des revendications 1 à 12, à l'état réticulé et à raison d'une quantité inférieure à 10 g/m².

14. Procédé de préparation en continu du film multicouche tel que défini dans la revendication 13, comprenant les étapes séquentielles de :
(i) combinaison des composants -NCO et -OH sous la forme d'un mélange adhésif rendu coulable par chauffage à une température appropriée,
(ii) enduction par ledit mélange adhésif d'une première couche mince de matériau sous la forme d'une couche substantiellement continue,
(iii) contrecollage d'une seconde couche mince, sur la première couche mince enduite conformément à l'étape (i), puis
(iv) réticulation du mélange adhésif.

15. Utilisation du film multicouche selon la revendication 13 pour la fabrication d'emballages flexibles.

## Patentansprüche

1. Zweikomponentiger Kaschierklebstoff ohne Lösungsmittel, umfassend eine -NCO-Komponente und eine -OH-Komponente, **dadurch gekennzeichnet, dass** die -NCO-Komponente durch Umsetzung eines stöchiometrischen Überschusses eines aromatischen oder aliphatischen Polyisocyanats (A) mit einer Zusammensetzung von Diolen (B), die, bezogen auf das Gesamtgewicht der Zusammensetzung:
- 60 bis 100 Gew.-% einer Zusammensetzung (B1) aus einem oder mehreren Di(polyricinoleat)diolen mit einer Hydroxylzahl Z_{OH} zwischen 30 und 70 mg KOH/g und der Formel (I): 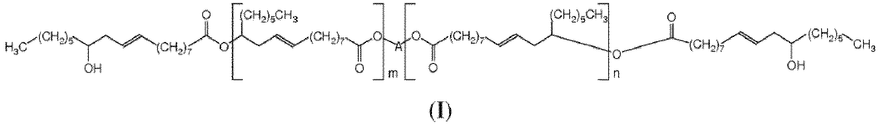 in der:
- A für einen zweiwertigen Kohlenwasserstoffrest, der gegebenenfalls durch ein oder mehrere Heteroatome, die aus Sauerstoff oder Schwefel ausgewählt sind, unterbrochen ist, steht;
- m und n gleich oder verschieden sind und für 0 oder eine ganze Zahl im Bereich von 1 bis 11 stehen und so beschaffen sind, dass m + n im Bereich von 0 bis 11 liegt; und
- 0 bis 40 Gew.-% einer Zusammensetzung (B2) aus Diolen, die eine Z_{OH} zwischen 72 und 360 mg KOH/g aufweisen und ausgewählt sind aus:
- dimerisierten Fettalkoholen mit 20 bis 44 Kohlenstoffatomen und
- Di(polyricinoleat)diolen der Formel (II): 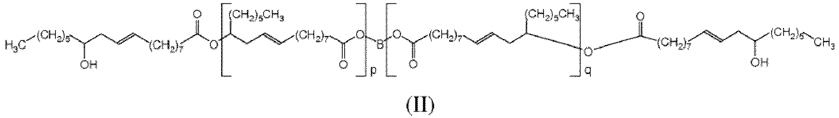 in der:
- B für einen wie oben für A definierten Rest steht, der mit dem durch A wiedergegebenen Rest identisch oder davon verschieden ist;
- p und q gleich oder verschieden sind und für 0 oder eine ganze Zahl im Bereich von 1 bis 3 stehen und so beschaffen ist, dass p + q im Bereich von 0 bis 3 liegt;
umfasst, gemäß einer Polyadditionsreaktion erhalten wird.

2. Zweikomponentiger Kaschierklebstoff nach Anspruch 1, **dadurch gekennzeichnet, dass** die Brookfield-Viskosität der -NCO-Komponente bei 40°C im Bereich von 500 bis 2000 mPa.s liegt.

3. Zweikomponentiger Kaschierklebstoff nach einem der Ansprüche 1 oder 2, **dadurch gekennzeichnet, dass** die Brookfield-Viskosität der -NCO-Komponente bei 40°C im Bereich von 500 bis 1500 mPa.s liegt.

4. Zweikomponentiger Kaschierklebstoff nach einem der Ansprüche 1 bis 3, **dadurch gekennzeichnet, dass** der zweiwertige Kohlenwasserstoffrest A einem Diol der Formel:
HO-A-OH (VI)
entspricht, bei dem jede der 2 -OH-Funktionen durch eine Einfachbindung ersetzt ist und dessen Hydroxylzahl Z_{OH} im Bereich von 110 bis 1808 mg KOH/g liegt.

5. Zweikomponentiger Kaschierklebstoff nach einem der Ansprüche 1 bis 4, **dadurch gekennzeichnet, dass** der zweiwertige Rest A einem Diol der Formel HO-A-OH (VI) entspricht, das aus:
(a) Ethylenglykol;
(b) 1,4-Butandiol;
(c) Diethylenglykol;
(d) 1,4-Cyclohexandimethanol;
(e) einem PolyPropylenGlykol mit einer Molmasse im Bereich von 400 g/mol bis 1000 g/mol; oder
(f) einem aliphatischen dimerisierten Fettalkohol mit 20 bis 44 Kohlenstoffatomen
ausgewählt ist.

6. Zweikomponentiger Kaschierklebstoff nach einem der Ansprüche 1 bis 5, **dadurch gekennzeichnet, dass** der zweiwertige Rest A einem Diol der Formel HO-A-OH (VI) entspricht, das aus einem aliphatischen dimerisierten Fettalkohol mit 35 bis 37 Kohlenstoffatomen oder einem PolyPropylenGlykol mit einer Molmasse von 400 g/mol ausgewählt ist.

7. Zweikomponentiger Kaschierklebstoff nach einem der Ansprüche 1 bis 6, **dadurch gekennzeichnet, dass** die Di(polyricinoleat)diole, aus denen die Zusammensetzung B1 besteht, eine Hydroxylzahl Z_{OH} zwischen 35 und 65 mg KOH/g aufweisen.

8. Zweikomponentiger Kaschierklebstoff nach einem der Ansprüche 1 bis 7, **dadurch gekennzeichnet, dass** die Zusammensetzung von Diolen (B) 70 bis 100 Gew.-% (B1) und 0 bis 30 Gew.-% (B2) umfasst.

9. Zweikomponentiger Kaschierklebstoff nach einem der Ansprüche 1 bis 8, **dadurch gekennzeichnet, dass** es sich bei dem Polyisocyanat (A) um 2,4- oder 4,4'-Diphenylmethandiisocyanat (MDI) handelt.

10. Zweikomponentiger Kaschierklebstoff nach einem der Ansprüche 1 bis 9, **dadurch gekennzeichnet, dass** die Mengen von (A) und (B) einem -NCO/-OH-Äquivalentverhältnis zwischen 2 und 10 entsprechen.

11. Zweikomponentiger Kaschierklebstoff nach einem der Ansprüche 1 bis 10, **dadurch gekennzeichnet, dass** es sich bei der -OH-Komponente um eine Zusammensetzung handelt, die etwa 80 Gew.-% Ricinolsäuretriglycerid umfasst.

12. Zweikomponentiger Kaschierklebstoff nach einem der Ansprüche 1 bis 11, **dadurch gekennzeichnet, dass** die -NCO- und -OH-Komponente in einer Menge vorliegen, die einem -NCO/-OH-Molverhältnis von etwa 2 entsprechen.

13. Mehrschichtfolie mit 2 dünnen Materialschichten, die durch eine kontinuierliche Schicht miteinander verbunden sind, **dadurch gekennzeichnet, dass** die Schicht aus dem zweikomponentigen Kaschierklebstoff gemäß einem der Ansprüche 1 bis 12 in vernetztem Zustand und in einer Menge von weniger als 10 g/m² besteht.

14. Verfahren zur kontinuierlichen Herstellung der Mehrschichtfolie gemäß Anspruch 13, das folgende aufeinanderfolgende Schritte umfasst:
(i) Kombinieren der -NCO- und -OH-Komponente in Form einer durch Erhitzen auf eine geeignete Temperatur fließfähig gemachten Klebstoffmischung,
(ii) Beschichten einer ersten dünnen Materialschicht mit der Klebstoffmischung in Form einer weitgehend kontinuierlichen Schicht,
(iii) Aufkaschieren einer zweiten dünnen Schicht auf die gemäß Schritt (i) beschichtete erste dünne Schicht, dann
(iv) Vernetzen der Klebstoffmischung.

15. Verwendung der Mehrschichtfolie nach Anspruch 13 zur Herstellung von flexiblen Verpackungen.

## Claims

1. Two-component lamination adhesive comprising an - NCO component and an -OH component, **characterized in that** the -NCO component is obtained by reacting, according to a polyaddition reaction, a stoichiometric excess of an aromatic or aliphatic polyisocyanate (A) with a composition formed of diols (B) comprising, on the basis of the total weight of said composition:
- from 60 to 100% weight/weight of a composition (B1) composed of one or more di(polyricinoleate) diols having a hydroxyl number N_{OH} of between 30 and 70 mg KOH/g and the formula (I): 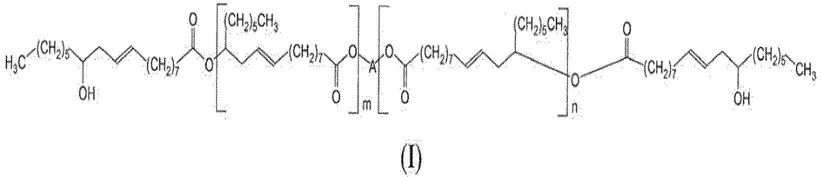 in which:
- A represents a divalent hydrocarbon radical optionally interrupted by one or more heteroatoms chosen from oxygen or sulfur;
- m and n, which are identical or different, represent 0 or an integer ranging from 1 to 11 and are such that m+n varies from 0 to 11; and
- from 0 to 40% weight/weight of a composition (B2) composed of diols having an N_{OH} of between 72 and 360 mg KOH/g and which are chosen from:
- dimerized fatty alcohols comprising from 20 to 44 carbon atoms, and
- di(polyricinoleate) diols having the formula (II) : 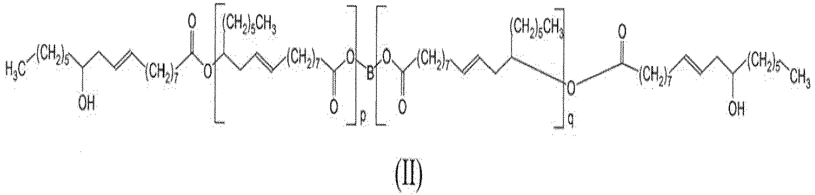 in which:
- B represents a radical as defined above for A which is identical to or different from the radical represented by A;
- p and q, which are identical or different, represent 0 or an integer ranging from 1 to 3 and are such that p+q varies from 0 to 3.

2. Two-component lamination adhesive according to Claim 1, **characterized in that** the Brookfield viscosity at 40°C of the -NCO component is within the range extending from 500 to 2000 mPa.s.

3. Two-component lamination adhesive according to either of Claims 1 and 2, **characterized in that** the Brookfield viscosity at 40°C of the -NCO component is within the range extending from 500 to 1500 mPa.s.

4. Two-component lamination adhesive according to one of Claims 1 to 3, **characterized in that** the divalent hydrocarbon radical A corresponds to a diol of formula:
HO-A-OH (VI)
each of the 2 -OH functional groups of which is replaced with a single bond and the hydroxyl number N_{OH} of which is within the range extending from 110 to 1808 mg KOH/g.

5. Two-component lamination adhesive according to one of Claims 1 to 4, **characterized in that** the divalent radical A corresponds to a diol of formula HO-A-OH (VI) chosen from:
(a) ethylene glycol;
(b) 1,4-butanediol;
(c) diethylene glycol;
(d) 1,4-cyclohexanedimethanol;
(e) a PolyPropylene Glycol with a molar mass ranging from 400 g/mol to 1000 g/mol); or
(f) an aliphatic dimerized fatty alcohol comprising from 20 to 44 carbon atoms.

6. Two-component lamination adhesive according to one of Claims 1 to 5, **characterized in that** the divalent radical A corresponds to a diol of formula HO-A-OH (VI) chosen from an aliphatic dimerized fatty alcohol comprising from 35 to 37 carbon atoms or a PolyPropylene Glycol with a molar mass of 400 g/mol.

7. The two-component lamination adhesive according to one of Claims 1 to 6, **characterized in that** the di(polyricinoleate) diols constituting the composition (B1) have a hydroxyl number N_{OH} of between 35 and 65 mg KOH/g.

8. Two-component lamination adhesive according to one of Claims 1 to 7, **characterized in that** the composition formed of diols (B) comprises from 70 to 100% weight/weight of (B1) and from 0 to 30% weight/weight of (B2).

9. Two-component lamination adhesive according to one of Claims 1 to 8, **characterized in that** the polyisocyanate (A) is 2,4'- or 4,4'-diphenylmethane diisocyanate (MDI).

10. Two-component lamination adhesive according to one of Claims 1 to 9, **characterized in that** the amounts of (A) and (B) correspond to an -NCO/-OH equivalent ratio of between 2 and 10.

11. Two-component lamination adhesive according to one of Claims 1 to 10, **characterized in that** the -OH component is a composition comprising at least approximately 80% by weight of ricinoleic acid triglyceride.

12. Two-component lamination adhesive according to one of Claims 1 to 11, **characterized in that** the -NCO and -OH components are present in an amount corresponding to an -NCO/-OH molar ratio equal to approximately 2.

13. Multilayer film comprising 2 thin layers of material bonded to one another by a continuous layer, **characterized in that** said layer is composed of the two-component lamination adhesive as defined in one of Claims 1 to 12 in the crosslinked state and in a proportion of an amount of less than 10 g/m².

14. Process for the continuous preparation of the multilayer film as defined in Claim 13, comprising the sequential stages of:
(i) combining the -NCO and -OH components in the form of an adhesive mixture rendered flowable by heating to an appropriate temperature,
(ii) coating, with said adhesive mixture, a first thin layer of material in the form of a substantially continuous layer,
(iii) laminating a second thin layer over the first thin layer coated in accordance with stage (i), then
(iv) crosslinking the adhesive mixture.

15. Use of the multilayer film according to Claim 13 in the manufacture of flexible packagings.
